# EUROPÄISCHE PATENTSCHRIFT

(11) **EP 2 242 214 B1**
(45) Veröffentlichungstag und Bekanntmachung des Hinweises auf die Patenterteilung: **23.05.2018**
(21) Anmeldenummer: 09176333.4
(22) Anmeldetag: 18.11.2009
(51) Int. Cl.: H04L 12/437, B61L 19/06, B61L 27/00, H04L 12/46

(54) **Redundanzverfahren für ein spezialisiertes Datennetzwerk**
Redundancy method for a specialised data network
Procédé de redondance pour un réseau de données spécialisé

(30) Priorität: 10.12.2008 EP 08171215
(43) Veröffentlichungstag der Anmeldung: 20.10.2010
(60) Teilanmeldung: 13162548.5
(73) Patentinhaber: Siemens Schweiz AG, 8047 Zürich (CH)
(72) Erfinder: Müller, Thomas, 8180 Bülach (CH)
(74) Vertreter: Maier, Daniel Oliver

(56) Entgegenhaltungen:
- WO-A1-2006/051355
- ANONYMOUS: "DIN IEC 62439, (DRAFT) Digital data communication for measurement and control - High availability automation networks" INTERNATIONAL STANDARD ISO/IEC, Nr. 62439, 1. April 2007 (2007-04-01), Seiten 1-138, XP008087015
- Hubert Kirrmann: "Standard Solutions for Redundancy in Industrial Ethernet- Standard Redundancy Methods for Highly Available Automation Networks"[Online] 21. September 2006 (2006-09-21), XP002573204 Prag EFTA Gefunden im Internet: URL:http://www.action-m.com/etfa2006/keyno te/download_3.php> [gefunden am 2010-03-11]
- Hubert Kirrmann, Mats Hansson, Peter Müri: "IEC 62439 PRP: Bumpless recovery for highly available, hard real-time industrial networks"[Online] 25. September 2007 (2007-09-25), XP002572673 IEEE Gefunden im Internet: URL:http://ieeexplore.ieee.org/search/srch abstract.jsp?tp=&arnumber=4416946&queryTex t%3Dbumpless+prp%26openedRefinements%3D*%2 6searchField%3DSearch+All> [gefunden am 2010-03-05]

## Beschreibung

Die vorliegende Erfindung bezieht sich auf ein System und ein Verfahren zur hochzuverlässigen zeitdeterministischen Kommunikation in einem hierarchisch aufgebauten Netzwerk, bestehend aus einem oder mehreren hochverfügbaren Backbones und Linien von dezentralen Funktionseinheiten.

Derartige dezentrale Funktionseinheiten werden im Besonderen in Schienenverkehrsnetzwerken eingesetzt, wo diese genutzt werden, um Fahrzeug und/oder Fahrweg beeinflussende und/oder Fahrzeug bzw. Fahrweg überwachende Einheiten zu steuern und bezüglich der Funktionalität zu überwachen und um Prozessdaten aufzunehmen und zurück zu melden. Als zugbeeinflussende Einheiten, die also Anweisungen an den Fahrzeugführer geben oder sogar direkt Eingriffe in der Fahrzeugsteuerung vornehmen oder direkt einen sicheren Fahrweg einstellen, können beispielsweise Signale, Weichen, Balisen, Linienleiter, Gleismagnete und dergleichen sowie auch Sensoren zum Erfassen von Prozessgrössen des fahrenden Zuges, wie Leistungsaufnahme, Geschwindigkeit und dergleichen, betrachtet werden. Als Zug- und Gleisabschnitt überwachende Einheiten können ebenfalls Balisen und Linienleiter, aber auch Achszähler und Gleisstromkreise genannt werden.

Üblicherweise werden diese dezentralen Funktionseinheiten von einem Stellwerk oder einem abgesetzten Stellrechner gesteuert. Für den Datentransfer zwischen dem Stellwerk und den Funktionseinheiten im Gleisbereich sind heute in der Regel standardisierte Kupferkabel vorgesehen, für deren klassische Stelldistanzlängen wegen der physikalischen Übertragungsparameter, den Kabelbelägen (RLC), bei 10 km in der Praxis die obere Grenze liegt. Bei gewissen Typen von Funktionseinheiten kann diese obere Limite jedoch auch nur bei maximal 6,5 km liegen.
Heutzutage stehen jedoch auch schon Datennetzwerke bei Eisenbahnen im Einsatz, welche dazu verwendet werden z.B. Daten unter benachbarten Stellwerken oder der Stellwerken und Leittechnik auszutauschen. Sie werden jedoch nicht in der Weise eingesetzt, um zugbeeinflussende und/oder zugüberwachende Funktionseinheiten zu steuern und zu überwachen, um dadurch eine Überbrückung von fast beliebigen Stelldistanzen zu ermöglichen. Diese Netzwerke sind vielmehr vom Typ eines Datentransportnetzwerkes (DTN), z.B. ein optisches Transportnetzwerkes, ausgestaltet und werden für die Übermittlung von Daten für die operationelle Betriebsebene und dergleichen eingesetzt. Dokument WO 2006051355 offenbart ein Netzwerk mit Stellwerken zur Steuerung von mehreren Eisenbahnschienen. In der hierarchischen Architektur wird ein Zentralrechner mit Back-Up CPU wird für die Steuerung verwendet. Darunter sind weitere PLC Einheiten, die redundante Hardware und Software aufweisen. Derartige Datennetzwerke erlauben eine sehr viel höhere Anzahl von Freiheitsgraden hinsichtlich
- der Festlegung der Position der Kopplungspunkte für den Anschluss von Stellwerk- und Leittechnikanlagen oder Teilen davon und somit dessen Aufstellungsorte,
- der angewandten Übertragungs-Verfahren und der Distanzen der Kommunikation unter verschiedenen Anlagenteilen.
Diese Datennetzzwerke ermöglichen so mitunter eine wesentliche Verbesserung beim Preis/Leistungsverhältnis und dennoch ein hoch zuverlässiger und entsprechend sicherer Datenaustausch der Eisenbahnsicherungseinrichtungen entlang von Gleisanlagen.
Anschauliche Anwendungsbeispiele für derartige Datennetzwerke sind Nebenstrecken oder Strecken mit ETCS Level 2 oder lange Tunnelstrecken, für die heute immer noch wegen der Limite bei den Stelldistanzlängen mit herkömmlichen Stellwerkkabeln eine Anordnung von Stellwerkrechnern innerhalb von Tunnels erforderlich macht. Die dort herrschenden rauen Einsatzbedingungen erfordern, dass die Stellwerkrechner in Kavernen oder Containern gekapselt und klimatisiert betrieben werden. Der Unterhalt ist in diesen Fällen entsprechend aufwendig. Die ganze Problematik besteht also darin, dass bedingt durch die limitierten Stelldistanzen Stellwerk und Aussenanlageteile nicht beliebig weit auseinander liegen können.

Die neuartigen Datennetzwerke haben jedoch einen Nachteil dahingehend, dass im Grunde jede zentrale und dezentrale Funktionseinheit in geeigneter Weise über einen Zugangspunkt und aus Gründen der Verfügbarkeit in redundanter Weise an ein solches Datennetzwerk angekoppelt werden muss. Damit ist momentan an einem einzelnen Netzwerkknoten für einen Anschluss einer Funktionseinheit ein vergleichsweise hoher Aufwand für die Kopplung mit dem Datennetzwerk erforderlich bei gleichzeitig nur vergleichsweise geringer Datentransferrate in Relation zur Netzwerkkapazität. Während heutige Glasfasernetze beispielsweise Übertragungsraten von GigaBit bis hin zu TeraBit Transferleistung zulassen, werden diesen Übertragungsraten bei diesen sicherungstechnischen Anwendungen jedoch nur sehr marginal genutzt.

Zugleich ist darüber hinaus durchaus ein wirtschaftliches Interesse seitens der Bahninfrastruktur-Betreiber erkennbar, die bestehenden sogenannten langlebigen Stellwerkkabel (an die Schienenwege angepasste Kupferkabel), welche heute für den Betrieb der Funktionseinheiten durch die Stellwerke eingesetzt werden, weiterhin für die Ansteuerung der Aussenanlagen zu nutzen.

Aus diesen vorstehend genannten Gründen liegt daher der vorliegenden Erfindung die Aufgabe zugrunde, eine Einrichtung und ein Verfahren zur Steuerung und/oder Überwachung von entlang eines Verkehrsnetzwerks angeordneten dezentralen Funktionseinheiten anzugeben, die einerseits die Vorteile eines digitalen Datentransportnetzwerkes nutzbar machen und andererseits den damit verbundenen Aufwand, wie z.B. den Verkabelungsaufwand, bei gleichzeitig hoher Verfügbarkeit wesentlich verringern.

Die vorliegende Erfindung löst nun mehr die folgenden technische Probleme.
- Mehrfache (redundante) Zustellung von Paketen über verschiedene (unabhängige) Pfade;
- Trotz hoher Flexibilität hinsichtlich Konfiguration und Ausbauvariante, müssen die Komponenten vor dem Einbau nicht vorkonfiguriert werden. (Für die Installation werden keine IT Spezialisten benötigt);
- Die Komponenten der Feldlinie (dezentrale Funktionseinheiten) können während des Betriebes ausgetauscht werden, ohne dass die Komponenten danach oder davor für den Einsatz vorkonfiguriert werden müssen, oder das gesamte Netzwerk abgeschaltet werden muss;
- Die Gefahr von im Kreis laufenden Paketen in redundanten Systemen wird unterdrückt.

Deterministische Datenübertragungszeiten werden so auch mit den niedrigen Datenraten (<2 Mb/s) der Feldlinien erreicht

Das Problem der Redundanz wird bei fast allen Datennetzen gelöst, indem beispielsweise für Ethernet, FDDI, DQDB, Token-Ring, SDH Redundanzmechanismen definiert wurden. Diese Redundanzmechanismen und die des Standards IEC 62439 "Industrial communication networks: high availability automation networks" sind dabei stark standardisiert. Hochverfügbare Datennetze wurden bisher über parallele Datenwege und Netzwerkgeräte mit redundanten Ports erstellt. Eine selbständige Konfiguration wurde mit Hilfe von zusätzlichen Protokollen und dadurch höherem Verkehrsaufwand erreicht, was höhere Datenraten erforderte und Distanzen auf elektrischen Übertragungsmedien einschränkte. Beim Austausch von Signalisierungskomponenten musste ein grosser Bereich des Systems stillgelegt werden. Um im Kreis laufende Pakete zu verhindern, wurden redundante Verbindungen durch zusätzliche Protokolle detektiert und entsprechende Netzwerkverbindungen bei nicht Gebrauch aus dem Netz genommen (Spanning Tree). Deterministische Datenübertragungszeiten wurden durch eine höhere Datenübertragungsrate erreicht, was sich auf die maximale Distanz zwischen zwei Systemkomponenten und die Kosten der Übertragungsmedien auswirkte.

Die Erfindung wird durch die unabhängigen Ansprüche definiert . Weitere Ausgestaltungen werden durch die abhängigen Ansprüche definiert. Gemäss der vorliegenden Erfindung umfasst die erfindungsgemässe Architektur einen oder mehrere Backbones, welche mit einer leistungsfähigen, hochverfügbaren Netzwerktechnologie (z.B. OTN) realisiert ist. Spezialisierte dezentrale Funktionseinheiten sind in Daisy-Chain zu einer Linie zusammengeschaltet und steuern die Endgeräte. Die Linie ist an beiden Enden über Gateways an Backbone Switches angeschlossen. Die Backbone Switches können zum gleichen oder zu einem anderen Backbone gehören. Die Linienverbindungen verfügen über eine Technologie (z.B. SHDSL), die es erlaubt, grosse Distanzen (<10km) zwischen den dezentralen Funktionseinheiten zu überbrücken.

Vorteilhafte Ausgestaltungen der Erfindung sind nachfolgend angegeben.

Die Erfindung und ihre vorteilhaften Ausgestaltungen werden wesentlich charakterisiert durch:
1. Ein hierarchisch aufgebautes Netzwerk zur hochzuverlässigen zeitdeterministischen Kommunikation, bestehend aus einem oder mehreren hochverfügbaren Backbones und Linien von dezentralen Funktionseinheiten. Beide Enden der Linien sind über die Backbone Knoten zu einem Ring zusammengeschaltet.
2. Ein ortsunabhängiger zentraler Rechner sendet über mehrere Ports Datenpakete, die über redundante Wege zu einer ortsabhängigen dezentralen Funktionseinheit gelangen. Die dezentrale Funktionseinheit sendet ebenfalls Pakete über zwei Ports an den zentralen Rechner.
3. Der zentrale Rechner richtet redundante Pakete über unterschiedliche Ports an eine dezentrale Funktionseinheit, welche die Pakete über unterschiedliche Ports empfängt.
4. Redundante Pakete verfügen über unterschiedliche Netzwerkadressen, aber gleiche Sequenznummern, damit der zentrale Rechner oder die dezentrale Funktionseinheit redundante Pakete identifizieren können.
5. Die dezentrale Funktionseinheit empfängt redundante Pakete über beide Ports, kann aber die Ports auch zum Weiterleiten von Paketen verwenden.
6. Die Netzwerkadressen zweier Ports eines Rechners oder der Funktionseinheiten werden durch einen Algorithmus bestimmt.
7. Die Netzwerkadressen werden den Einheiten von ausserhalb zugeführt.
8. Das Gateway zwischen Backbone und Linie leitet nur Pakete, die an Endgeräte, die auf der Linie liegen weiter. Unbekannte Adressen werden vom Gateway verworfen.
9. Das Gateway muss nicht konfiguriert werden, sondern lernt anhand der Absenderadressen, von auf der Linie liegenden Geräten.
10. Ein Paket, das an eine Funktionseinheit gerichtet wird, wird von dieser nicht mehr weitergeleitet.
11. Werden physisch getrennt Backbone-Netze verwendet, muss der zentrale Rechner über beide Ports Unicast-Frames an die Gateways senden, die das Telegramm von beiden Richtungen in die Linie einspeisen. Um für gemischte Konfigurationen eine möglichst einfache Konfigurierbarkeit zu erreichen, werden pro dezentraler Funktionsreinheit zwei Frames mit deren Zieladressen über die beiden physischen Frames verschickt. Die nicht benötigten Pakete, deren Zieladressen dem entsprechenden Gateway nicht bekannt sind, werden vom Gateway ausgefiltert.
12. Das Gateway lernt die Adresse der auf der Linie liegenden Rechner durch "Hello" Pakete, die diese Rechner aussenden. Der Paketfilter des Gateways verwirft Einträge nach einer gewissen Zeit, wenn von einem Rechner auf seiner Linie keine Pakete mehr ankommen (z.B. wenn eine dezentrale Funktionseinheit während des Betriebes von der Linie entfernt wird).

Es ist somit ein besonderer Vorteil der vorliegenden Erfindung, dass die Ports der Funktionseinheiten auf der Linie zwei Zwecken dienen. Zum einen empfangen sie redundante Pakete und zum anderen leiten sie Pakete weiter, die nicht an diese Funktionseinheit gerichtet sind. Gateways zwischen Backbonenetzwerk und Linie filtern den Verkehr zu den Linien aus, so dass nur Pakete, die an die dezentralen Funktionseinheiten der Linie gerichtet sind, durch die Gateways durchkommen. Im Gegensatz zu herkömmlichen Switches, welche nach der Initialisierung zunächst alle unbekannten Pakete durchlassen, blockiert dieser erfindungsgemässe Switch nach der Initialisierung alle nicht zu seiner Linie gehörenden Pakete.

Bevorzugte Ausführungsbeispiele der vorliegenden Erfindung werden nachfolgend näher erläutert. Dabei zeigt die Zeichnung die folgenden Abbildungen:
Abbildung 1: Systemübersicht
Abbildung 2: Prinzip der SInet-Redundanz
Abbildung 3: Frames vom Stellwerk (Stw) zu einer Switch Unit(SU) über ein geswitchtes Netz
Abbildung 4: Ausfiltern doppelter Frames durch eine Kommunikationsschnittstelle (UCOM)
Abbildung 5: Frames von der SU zum Stw über ein geswitchtes Netz
Abbildung 6: Frames vom Stw zur SU über zwei getrennte Netze
Abbildung 7: Frames von der SU zum Stw über zwei getrennte Netze
Abbildung 8: Komplexe Konfiguration
Abbildung 9: Endlos-Loop eines Broadcast-Frames
Abbildung 10: Broadcast-und Multicast-Frames von Backbone werden in den UCOM verworfen
Abbildung 11: Loop-Unterdrückung von Unicast-Frames
Abbildung 12: Jede SU nimmt die an sie adressierten Frames von SU-Linie.

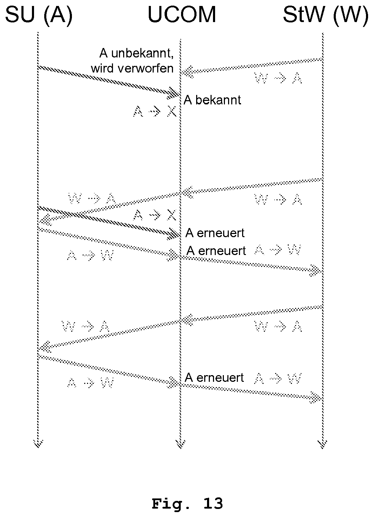

Abbildung 13: Der Startup Prozess Verlauf

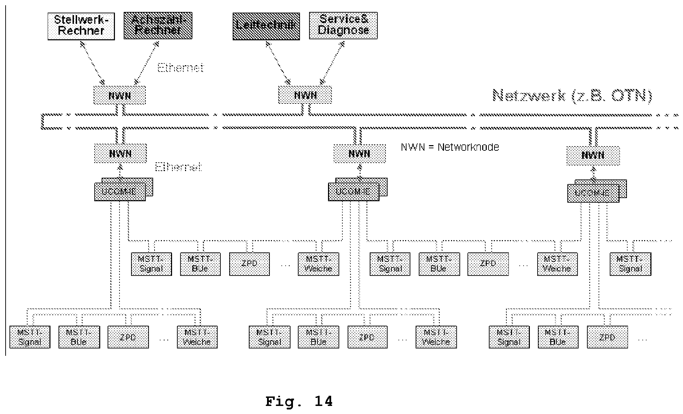

Abbildung 14: Das Gesamt-Layout

### Systemübersicht

### 1.1 Redundanzkonzept

Die für ein Eisenbahndatennetzwerk geforderte hohe Verfügbarkeit wird durch redundantes Senden und Filtern von Telegrammen erreicht. Das Verfahren basiert auf PRP (Parallel Redundancy Protocol) gemäss IEC 62439.

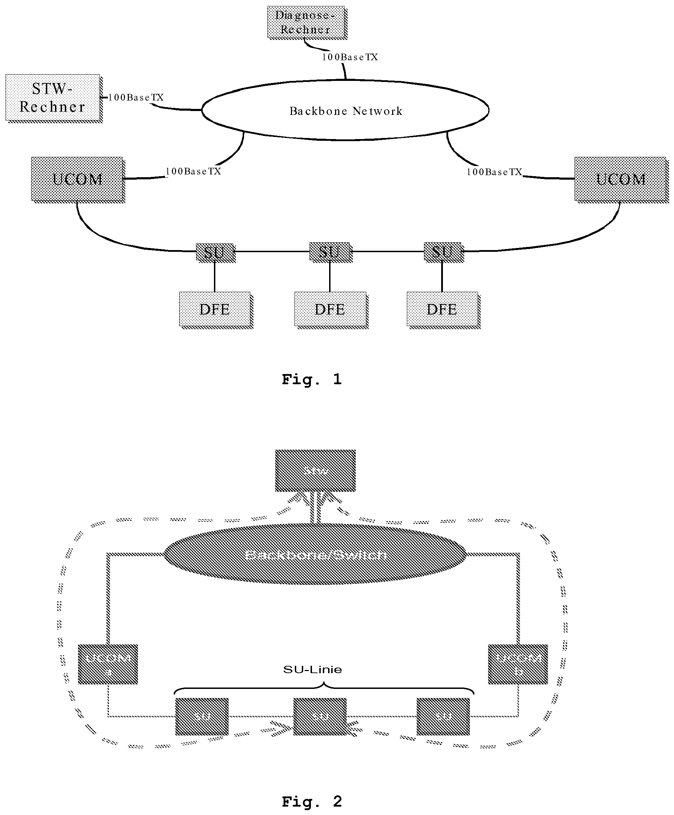

Abbildung 2 zeigen das Prinzip. Die verwendeten Elemente sind:
**Stw:** Stellwerk, das redundant (durch zwei oder mehr Interfaces) an das Backbone-Netz angeschlossen wird.
**Backbone-Netz:** Dediziertes, breitbandiges Netz mit Switching-Eigenschaften gemäss 802.1d. Es kann als ein oder als zwei physische Netze realisiert werden.
**UCOM:** Media-Umsetzung zwischen Backbone-Netz und SU-Linie. Die Funktionen sind analog zu einer Bridge, allerdings mit speziellen Filtereigenschaften.
**SU:** Switching Unit mit zwei Anschlüssen an die SU-Linie und einer Verbindung zum dezentralen Feldelement DFE (siehe Abbildung 1). Die SU leitet im Wesentlichen Frames, die nicht an sie adressiert sind, auf dem anderen Port der SU-Linie weiter. An sie adressierte Frames werden an das DFE gesendet (siehe Abbildung 1). Da die SU als Proxy für das DFE agiert, wird im Folgenden das DFE als Teil der SU betrachtet (siehe Abbildung 2).

Die Redundanz basiert auf folgendem Grundprinzip:
- Das Stw muss seine Telegramme über den Backbone an die UCOM a und die UCOM b senden.
- Die SUs müssen ihre Telegramme über beide Ports aussenden, so dass beide Ports am Stellwerk diese empfangen können.
- Stw und SUs müssen mehrfach empfangene Telegramme ausfiltern.
In den folgenden Kapiteln werden Konfigurationen mit einem oder zwei physischen Netzen gezeigt.

### 1.1.1 Konfiguration mit einem physischen Backbone-Netzwerk

### a) Adressierung und Routing von Paketen vom Stellwerk zur Switching-Unit

Ein Stw, das ein Telegramm an eine SU sendet, schickt mehrere (zwei) Unicast-Frames an unterschiedliche Adressen B0 und B1 (der Adressaufbau ist in Kapitel 1.4 beschrieben). Die Adressen entsprechen den Port-Adressen der SU, die je an einer UCOM angeschlossen sind. Der Backbone-Switch ermittelt die Ziel-Ports und leitet die Frames zu den entsprechenden UCOM. Das Verfahren für das Routing wird im Kapitel 1.1.2 beschrieben.

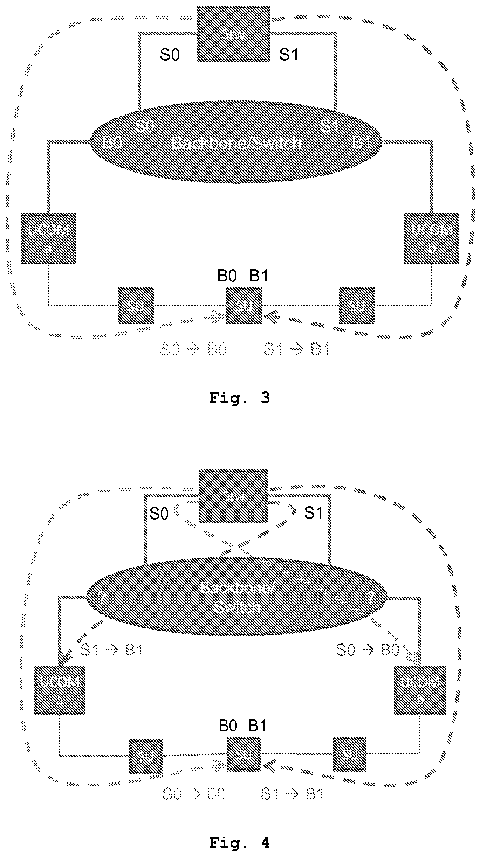

Falls die Ziel-Adressen dem Backbone/Switch nicht bekannt sind (z.B. in der Startup-Phase oder nach einer Rekonfiguration), leitet er die ausgesandten Frames an alle Ports, d.h. auch an beide UCOMs. Wie Abbildung 4 zeigt, werden nicht benötigte Frames von den UCOM ausgefiltert, um unnötigen Verkehr auf der SU-Linie zu vermeiden. Die UCOM leitet Telegramme vom Backbone nur weiter, wenn sie deren (SU-)Adresse kennt. Das Verfahren wird im Kapitel 1.3, "Filter-Funktion der UCOM", genauer beschrieben.

### b) Adressierung und Routing von Paketen von der Switching-Unit zum Stellwerk

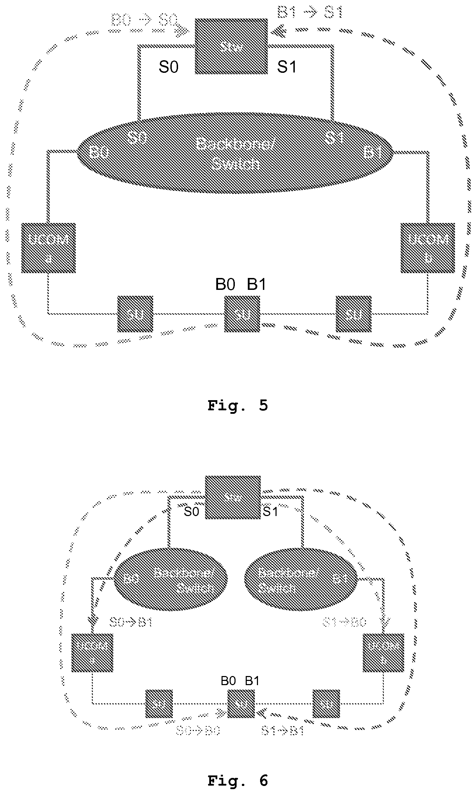

Wie Abbildung 5 zeigt, muss jede SU ebenfalls zwei Frames an das Stw senden. Dabei müssen zwei Zieladressen verwendet werden, damit sicher beide Interfaces des Stw beliefert werden. Diese Zieladressen sollen nicht vorkonfiguriert werden, sondern von den SU auf Grund der eintreffenden Stw-Pakete erlernt werden. In dieser Konfiguration ist es grundsätzlich gleichgültig, über welches SU-Interface welche Stw-Zieladresse adressiert wird.

### 1.1.2 Konfiguration mit zwei physisch getrennten Backbone-Netzwerken

### a) Adressierung und Routing von Paketen vom Stellwerk zur Switching-Unit

Werden zwei physisch getrennte Backbone-Netze verwendet (siehe Abbildung 6), bleibt das grundsätzliche Funktionsprinzip gleich wie bei einem Backbone. Das Stw muss über beide Ports Unicast-Frames an die UCOM senden, die das Telegramm von beiden Richtungen in die SU-Linie einspeisen. Um für gemischte Konfigurationen (siehe Kapitel 1.1.3) eine möglichst einfache Konfigurierbarkeit zu erreichen, werden pro SU zwei Frames mit deren beiden Zieladressen über die beiden physischen Netze verschickt. Die nicht benötigten Frames, deren SU-Zieladressen der entsprechenden UCOM nicht bekannt sind, werden von den UCOM ausgefiltert.

### b) Adressierung und Routing von Paketen von der Switching-Unit zum Stellwerk

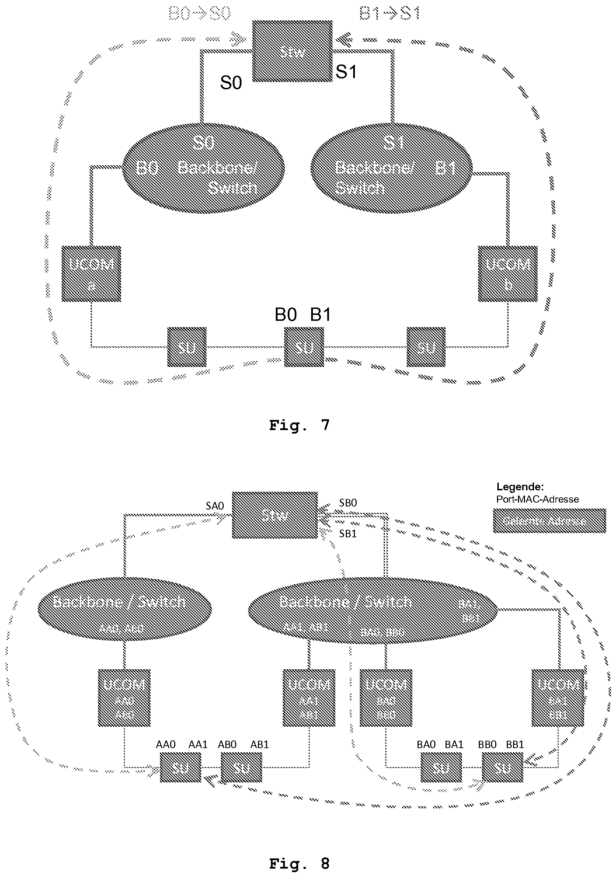

Wie Abbildung 7 zeigt, senden die SU je ein Frame über beide Netze an das Stw. Dabei müssen als Zieladressen die Stw-Absenderadresse der am entsprechenden Port empfangenen Stw-Frames verwendet werden. Dies steht im Gegensatz zur der in Abbildung 5 gezeigten Konfiguration mit einem Netz, bei der es gleichgültig war, über welches SU-Interface welche Stw-Zieladresse adressiert wurde.

### 1.1.3 Konfiguration mit getrennten und gemeinsamen Backbone-Netzwerken

Mit Hilfe der bisher vorgestellten Konfigurationsregeln können die SU-Linien an beliebige Backbone-Ports und die SU ohne Beachtung der Port-Orientierung angeschlossen werden. Die Konfiguration der Abbildung 8 setzt jedoch voraus, dass die rechte Anbindung an das Stw, wie gezeigt, über zwei Ports erfolgt, da sonst die Redundanz für die rechte SU-Linie nicht gegeben wäre.

### 1.2 Filter Funktion zur Unterdrückung redundanter Telegramme

In den SU und dem Stw müssen die aus Gründen der Redundanz doppelt gesendeten Frames (Duplikate) ausgefiltert werden. Das Verfahren ist in Kapitel 1.3 beschrieben und soll hier nur prinzipiell wiederholt werden.
Da es sich bei Eisenbahnnetzwerk um eine kontrollierte Umgebung handelt, wird für alle Kommunikationspartner ein PRP-Stack vorausgesetzt. Da alle Knoten einen PRP-Stack haben, werden keine Supervisory-Frames versendet.

Der PRP Stack fügt am Ende der Nutzdaten den Redundancy Controller Trailer (RCT) ein, der eine Sequenznummer enthält, die (pro Verkehrsbeziehung) bei jedem gesendeten Frame inkrementiert wird. Das genaue Frame Format ist in IEC Norm 62439 beschrieben. Mehrfach gesendeten Frames mit identischem Nutzinhalt haben also unterschiedliche Sequenznummern im Gegensatz zu redundanten Frames, welche dieselbe Sequenznummer haben.

Wie einleitend erwähnt, wird davon im folgenden davon ausgegangen, dass alle Knoten über einen PRP-Stack verfügen. Für andere Konfigurationen (mit Knoten ohne PRP-Stack) sei hier auf das Realisierungskonzept verwiesen.

Die Filterfunktion erfordert die Erkennung von Duplikaten. Diese erfüllen beide der folgenden Bedingungen:
1. Sie haben die gleiche Verkehrsbeziehung; das heisst, die gleiche Paarung von Sender- und Empfänger. Da die SU und das Stw mehrere MAC-Adressen benötigen, müssen diese einfach aufeinander "gemapped" werden können.
2. Sie haben die gleiche Sequenznummer, eine den Daten angefügte Laufnummer, die (pro Verkehrsbeziehung) bei jedem gesendeten Frame inkrementiert wird. Mehrfach gesendeten Frames mit identischem Inhalt haben also unterschiedliche Sequenznummern im Gegensatz zu redundanten Frames.

Der Empfänger führt eine Hash-Tabelle mit Verkehrsbeziehung und Sequenznummer als Schlüssel. Trifft ein Frame ein, sucht er den Schlüssel in der Hash-Tabelle. Falls er einen entsprechenden Eintrag findet, wird das Frame verworfen; falls nicht, wird ein entsprechender Eintrag in der Hash-Table erstellt und das Frame weitergereicht.
Das Verfahren funktioniert auch für Broadcast- und Multicast-Frames, die beim vorliegenden Eisenbahndatennetzwerk jedoch nicht zum Einsatz kommen.

### 1.3 Loop-Unterdrückung

Ein grosses Problem bei vermaschter Topologie (wie beim erfindungsgemässen Eisenbahndatennetzwerk) sind Frames, die endlos im Netz zirkulieren. Die in IEEE 802.1x definierten Protokolle (Spanning Tree etc.) sind für das Eisenbahndatennetzwerk aus zeitlichen Gründen nicht geeignet.

### 1.3.1 Loop-Unterdrückung von Broadcast oder Multicast Frames

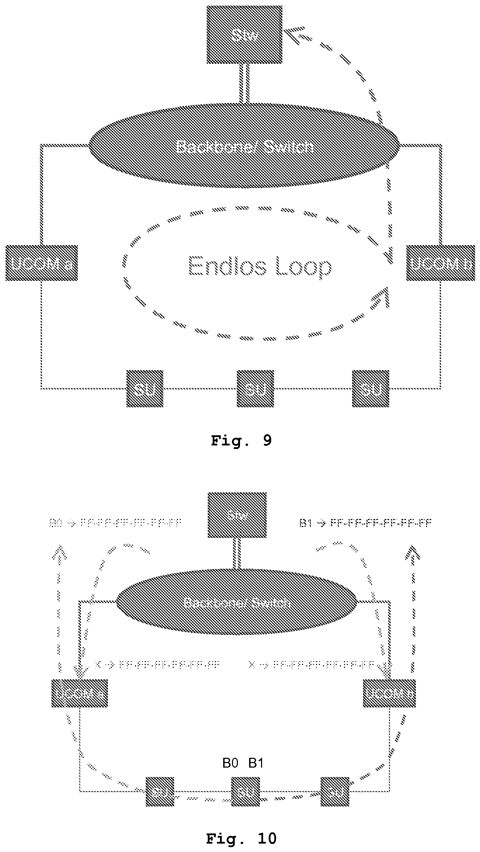

Das grösste Potenzial für Loops haben Broadcast- und Multicast-Frames, da diese von Switches grundsätzlich nicht ausgefiltert werden. Wie Abbildung 9 zeigt, würde ein solches Frame ohne Gegenmassnahmen endlos vom Backbone zur UCOM a, von dort über die SU-Linie zur UCOM b und wieder auf den Backbone geschickt. Das Frame würde aber auch in der Gegenrichtung zirkulieren, die gesamte Kapazität der SU-Linie belegen und vom Backbone bei jedem Durchgang an alle Knoten des Netzes geliefert.

Beim vorliegenden Eisenbahndatennetzwerk werden keine Broadcast-basierten Protokolle wie z.B. ARP benötigt (siehe Kapitel 1.4). Wie Abbildung 10 zeigt, werden Loops zuverlässig unterdrückt, indem die UCOM allfällige vom Backbone kommende Broadcast- und Multicast-Frames verwerfen. Gleichzeitig wird damit die SU-Linie von störendem Verkehr befreit. Broadcast- oder Multicast-Frames, die von der SU-Linie kommen, dürfen weitergeleitet werden.

### 1.3.2 Loop-Unterdrückung von Unicast-Frames

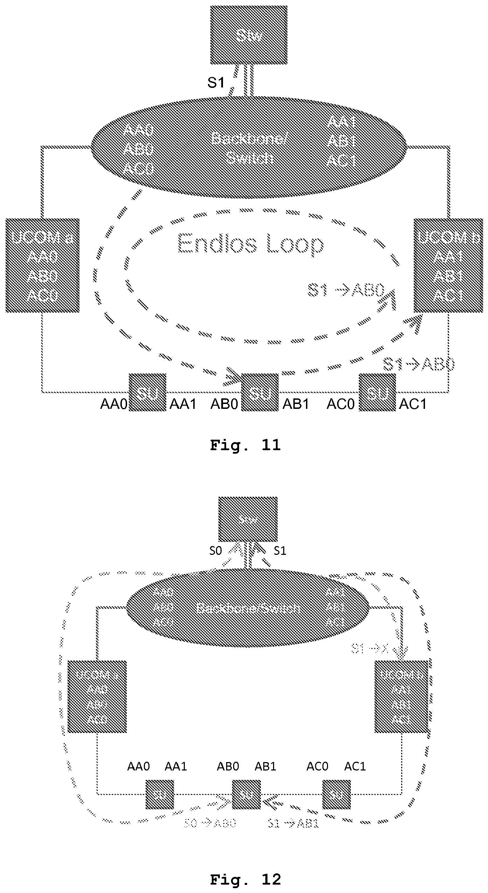

Wie Abbildung 11 zeigt, würden ohne Gegenmassnahmen auch Unicast-Frames endlos zirkulieren. Ein Frame von S1 nach AB0 geschickt, würde über UCOM a, die SUs und UCOM b wieder auf den Backbone geleitet, von wo es wiederum an die UCOM a gesendet würde. Als zusätzliches Problem würde auch die Adresse S1 einem falschen Backbone-Port, dem der UCOM b zugeordnet, womit das Stellwerkport S1 (bis zum nächsten vom Stellwerk verschickten Frame) nicht mehr erreichbar wäre.

Wie Abbildung 12 zeigt, kennen die UCOM alle zugewandten Port-Adressen (Port- = MAC-Adresse) der SU-Linie. Frames, mit anderen, unbekannten Zieladressen (S1 →X), werden durch die UCOM verworfen und kommen nie auf die SU-Linie. Damit wird die Last reduziert und für diese Frames ist auch kein Loop möglich.

Auf der SU-Linie kommen also nur Frames vor, die eine SU adressieren. Jede SU muss die an sie adressierten Frames annehmen und darf sie nicht auf der SU-Linie weiterleiten. Das heisst genauer, Frames, die einer der SU-Adressen entsprechen, werden von der SU nicht weitergeleitet und kommen so nie zur zweiten UCOM. Der Loop ist damit auch für diese Frames zuverlässig unterbrochen.

Es kann vorkommen, dass, nachdem die UCOM alle auf der SU-Linie vorkommenden Adressen gelernt haben, eine SU im Betrieb aus der SU-Linie herausgenommen wird. In diesem Fall würde die UCOM ein Frame weiterleiten, dessen Adresse sich nicht mehr auf der SU-Linie befindet. Damit dieses Frame am Ende der Linie nicht von der UCOM auf den Backbone geleitet wird, leitet die UCOM nur Frames auf den Backbone, dessen Zieladresse nicht von der eigenen SU-Linie stammt. Die Adresslearningtable der UCOM hat ausserdem einen TTL Eintrag, der seine Gültigkeit verliert, wenn eine SU lange keine Frames mehr sendet. Die Learning Tables der linken und der rechten UCOM werden zur gleichen Zeit ungültig. Falls dies nicht genau der Fall ist, so kann es sein, dass ein Frame maximal einmal im Kreis gesendet wird.

### 1.4 Adressierung

### 1.4.1 Adress-Management

### a) Grundsätze

Beim vorliegenden Eisenbahndatennetzwerk handelt es sich um eine kontrollierte, konfigurierte Umgebung. Das bedeutet, dass das Stw und allfällige Diagnose-Stationen die Topologie und die einzelnen Knoten des Netzes aufgrund der durch die Projektierung erstellten Konfiguration kennen. Diagnose-Stationen sind nicht feste Bestandteile der Konfiguration, sondern können dynamisch zugeschaltet werden. Die Konfigurationsdateien der Anlage sind auf den Diagnose-Stationen (analog zum Stellwerk) statisch gespeichert und werden nicht dynamisch ermittelt.

In den UCOM, SU und DFE sollen keine Konfigurationsdaten gespeichert werden, so dass diese im Feld jederzeit und ohne weitere Vorkehrungen ausgetauscht werden können. Die notwendige Identifizierung der DFE erfolgt über eine Applikationsadresse die auf einem Dongle gespeichert, der dem Installationsort fest zugeordnet ist. Die IP- und MAC-Adressen werden von der Applikationsadresse (Dongle) algorithmisch abgeleitet.

Die anderen für das Routing, Forwarding und Filtering der Frames notwendigen Angaben werden im Betrieb erlernt. Da explizit keine Protokolle zur dynamischen Adresszuweisung/- auflösung (wie BOOTP oder ARP) eingesetzt werden, muss die SU-Linie nicht Broadcast-fähig sein. Um die Komplexität zu minimieren, werden darum Broadcast-Frames von den UCOM ausgefiltert.

### b) Art, Einsatz und Verwendung der Adressen

### Applikations-Adresse:

- Wird in der Stellwerk-Applikation verwendet, um DFE zu adressieren;
- Die Zuteilung erfolgt über einen Dongle;
- Erlaubt Austausch des DFE ohne manuelle Adress-Rekonfiguration.

### MAC-Adresse:

- Wird für die Layer-2-Adressierung aller Komponenten eingesetzt.
- Dient dem Transport der zeit- und sicherheitsrelevanten Pakete durch das Backbone-Netz und SU-Linie.
- UCOM und SU verwenden lokal administrierte Adressen, die vom der Applikations-Adresse (Dongle) abgeleitet werden.
- Stw und Service&Diagnose-Rechner haben eine hardwaremässige vorhandene MAC Adresse.

### IP-Adresse:

- Wird für die (Fern-)Diagnose eingesetzt.
- Transport der IP-Datagramme im Eisenbahndatennetzwerk;
- SU- und UCOM-Adressen werden vom Dongle abgeleitet, es wird eine Adresse aus dem Adressraum der privaten IP-Adressen gewählt. Die Zusammensetzung der Adresse ist in Kapitel 4.3 beschrieben.
- Stw und Gateway sind vorbestimmt.

### 1.4.2 Startup Prozess

Die Komponenten sind alle austauschbar und erfordern bei Installation oder Wechsel keine manuelle Vorkonfigurierung. Die Komponenten werden durch den unten beschriebenen Startup Prozess automatisch konfiguriert. Die Konfigurierung findet nach einem Power-On Reset statt.

Die folgenden Voraussetzung müssen erfüllt sein, damit der Startup Prozess statt finden kann:
- Das Stw besitzt aufgrund der Konfiguration die DFE-Applikations und MAC-Adressen.
- Die UCOM hat keine Adressen gelernt
- SU hat via Service-Kanal der DFE die Applikations-Adresse (A) vom HW-Dongle gelesen

Die UCOM leitet nur Frames vom Backbone in die SU-Linie weiter, wenn sie deren SU-Adresse (A) kennt. (siehe auch Kapitel 1.1.1)

Die ersten Frames vom Stw zu den SU werden verworfen, da die UCOM die Adresse der SU noch nicht kennt. Die SU melden sich darum bei der UCOM an. Dies geschieht durch spezielle "Hello"-Pakete, die immer gesendet werden, wenn die SU eine definierte Zeit (Hello-Time) nichts geschickt hat. Durch die "Hello"-Pakete der SU lernt die UCOM deren Adresse. Im Folgenden werden die Telegramme von STW zu SU durchgeleitet. Wird die Hello-Time grösser als die Poll-Zeit des Stw gewählt, werden die Hello-Pakete nur beim Einschalten oder nach dem Austausch von Komponenten gesendet.

## Patentansprüche

1. Hierarchisch aufgebautes Eisenbahndatennetzwerk zur hochzuverlässigen zeitdeterministischen Kommunikation von Zugverkehr steuernden Datenpaketen von einem Stellwerk (Stw) an dezentrale Feldelemente (DFE) und/oder von dezentralen Feldelementen (DFE) an das Stellwerk (Stw), umfassend:
a) einen oder mehrere hochverfügbare Backbones (OTN),
b1) das Stellwerk, das redundant durch mindestens zwei Interfaces an den oder die Backbones (OTN) angeschlossen ist,
b2) mindestens zwei zu einer Linie zusammengeschaltete dezentrale Feldelemente (DFE), die über jeweils eine dezentrale Funktionseinheit (SU) an der Linie ankoppeln, wobei beide Enden der Linie von einem Gateway (UCOM) terminiert sind und über den oder die Backbones (OTN) zu einem Ring zusammengeschaltet sind,
c) ein ortsunabhängiger zentraler Stellwerkrechner, der über mehrere Ports Datenpakete sendet, die redundant über die beiden Gateways (UCOM) zu der ortsabhängigen dezentralen Funktionseinheit (SU) gelangen, wobei die dezentrale Funktionseinheit (SU) ebenfalls Datenpakete über zwei Ports an den zentralen Stellwerkrechner sendet, und wobei der zentrale Stellwerkrechner redundante Datenpakete über unterschiedliche Ports an eine bestimmte dezentrale Funktionseinheit (SU) richtet, welche die redundanten Datenpakete über unterschiedliche Ports empfängt.

2. Eisenbahndatennetzwerk nach Anspruch 1, wobei redundante Datenpakete über unterschiedliche Netzwerkadressen, aber gleiche Sequenznummern verfügen, mit denen der zentrale Stellwerkrechner oder die dezentrale Funktionseinheit (SU) redundante Datenpakete identifiziert.

3. Eisenbahndatennetzwerk nach Anspruch 1 oder 2, wobei die dezentrale Funktionseinheit (SU) redundante Pakete über beide Ports empfängt und die Ports optional auch zum Weiterleiten von Paketen verwendet.

4. Eisenbahndatennetzwerk nach einem der Ansprüche 1 bis 3, wobei das Gateway (UCOM) zwischen einem Backbone und einer Linie nur solche Pakete weiterleiten, die an dezentrale Feldelemente (DFE), die auf der Linie liegen, gerichtet sind, wobei Pakete mit an der Gateway (UCOM) unbekannter Adresse von dem Gateway (UCOM) verworfen werden.

5. Eisenbahndatennetzwerk nach Anspruch 4, wobei der Gateway selbstkonfigurierend ausgestaltet ist und anhand der Absenderadressen lernt, welche dezentralen Funktionseinheiten (SU) auf der Linie liegen.

6. Eisenbahndatennetzwerk nach Anspruch 4 oder 5, wobei der Gateway die Adresse der auf der Linie liegenden dezentralen Funktionseinheiten (SU) durch "Hello"-Pakete lernt, die die mit der dezentralen Funktionseinheit (SU) verknüpften Rechner periodisch aussenden.

7. Verfahren zur hochzuverlässigen zeitdeterministischen Kommunikation von Zugverkehr steuernden Datenpaketen von einem Stellwerk (Stw) an dezentrale Feldelemente (DFE) und/oder von dezentralen Feldelementen (DFE) an das Stellwerk (Stw) in einem hierarchisch aufgebauten Eisenbahndatennetzwerk, umfassend die folgenden Schritte:
a) Einrichten eines oder mehrerer hochverfügbarer Backbones (OTN),
b1) Einrichten eines Stellwerks, das redundant durch mindestens zwei Interfaces an den oder die Backbones (OTN) angeschlossen ist,
b2) Einrichten von mindestens zwei zu einer Linie zusammengeschalteten dezentralen Feldelementen (DFE), die über jeweils eine dezentralen Funktionseinheit (SU) an der Linie ankoppeln, wobei beide Enden der Linie von je einem Gateway (UCOM) terminiert werden und über den oder die Backbones zu einem Ring zusammengeschaltet werden,
c) Einrichten eines ortsunabhängigen zentralen Stellwerkrechners, der über mehrere Ports Datenpakete sendet, die redundant über die beiden Gateways (UCOM) zu der ortsabhängigen dezentralen Funktionseinheit (SU) gelangen, wobei die dezentrale Funktionseinheit (SU) ebenfalls Datenpakete über zwei Ports an den zentralen Stellwerkrechner sendet, und wobei der zentrale Stellwerkrechner redundante Datenpakete über unterschiedliche Ports an eine bestimmte dezentrale Funktionseinheit (SU) richtet, welche die redundanten Datenpakete über unterschiedliche Ports empfängt.

8. Verfahren nach Anspruch 7, wobei redundante Datenpakete über unterschiedliche Netzwerkadressen, aber gleiche Sequenznummern verfügen, mit denen der zentrale Stellwerkrechner oder die dezentrale Funktionseinheit (SU) redundante Datenpakete identifiziert.

9. Verfahren nach Anspruch 7 oder 8, wobei die dezentrale Funktionseinheit (SU) redundante Pakete über beide Ports empfängt und die Ports optional auch zum Weiterleiten von Paketen verwendet.

10. Verfahren nach einem der Ansprüche 7 bis 9, wobei das Gateway (UCOM) zwischen einem Backbone und einer Linie nur solche Pakete weiterleitet, die an dezentrale Feldelemente (DFE), die auf der Linie liegen, gerichtet sind, wobei Pakete mit an dem Gateway (UCOM) unbekannter Adresse von dem Gateway (UCOM) verworfen werden.

11. Verfahren nach Anspruch 10, wobei die Kommunikationseinheit selbstkonfigurierend ausgestaltet ist und anhand der Absenderadressen lernt, welche dezentralen Funktionseinheiten (SU) auf der Linie liegen.

12. Verfahren nach Anspruch 10 oder 11, wobei die Kommunikationseinheit die Adresse der auf der Linie liegenden dezentralen Funktionseinheiten (SU) durch "Hello"-Pakete lernt, die die mit der dezentralen Funktionseinheit verknüpften Rechner periodisch aussenden.

## Claims

1. Hierarchically built railway data network for highly reliable time deterministic communication using data packets controlling the railway traffic, said data packets being transmitted from an interlocking system (Stw) to decentralised field elements (DFE)and/or from decentralised field elements (DFE) to the interlocking system (Stw); comprising:
a) one or several highly available backbones (OTN),
b1) the interlocking system connected redundantly by at least two interfaces to the one or several backbones (OTN),
b2) at least two decentralised field elements (DFE) interconnected to one line and coupled to the line by a decentralised functional unit (SU) each, wherein both ends of the line are terminated by a gateway (UCOM) and interconnected to a ring via the one or several backbones (OTN),
c) a location-independent central interlocking system data processing unit sending data packets via several ports, which arrive redundantly via both gateways (UCOM) to the location-dependent decentralised functional unit (SU), wherein the decentralised functional unit (SU) also sends data packets via two ports to the central interlocking system data processor, and wherein the central interlocking system data processing unit transmits redundant data packets via different ports to a determined functional unit (SU), which receives the redundant data packets via different ports.

2. The railway data network according to claim 1, wherein redundant data packets comprise different network addresses but same sequence numbers by means of which the central interlocking system data processing unit or the decentralised functional unit (SU) is enabled to identify redundant data packets.

3. The railway data network according to claim 1 or 2, wherein the decentralised functional unit (SU) receives redundant packets via two ports and also utilises optionally the ports to forward data packets.

4. The railway data network according to one of the claims 1 to 3, wherein the gateway (UCOM) only forwards packets between a backbone and a line that are directed to a decentralised field elements (DFE) being part of that line, wherein data packets with an address unknown to the gateway (UCOM) are discarded by the gateway (UCOM).

5. The railway data network according to claim 4, wherein the gateway is enabled to self-configure and to learn on the basis of sender addresses which of the decentralised functional units (SU) are comprised in the line terminated by that gateway.

6. The railway data network according to claim 4 or 5, wherein the gateway learns the address of the decentralised functional unit (SU) comprised in that line by means of "Hello" packets, which are send out periodically by the data processors that are connected to the decentralised functional unit (SU).

7. Method for highly reliable time deterministic communication using data packets controlling the railway traffic in an hierarchically built railway data network, said data packets being transmitted from an interlocking system (Stw) to decentralised field elements (DFE)and/or from decentralised field elements (DFE) to the interlocking system (Stw), comprising the following steps:
a) providing one or several highly available data backbones (OTN),
b1) providing an interlocking system that is redundantly connected by at least two interfaces to the one or several data backbones (OTN),
b2) providing at least two decentralised field elements (DFE) interconnected to one line and coupled to the line by a decentralised functional unit (SU) each, wherein both ends of the line are terminated by a gateway (UCOM) and interconnected to a ring via the one or several data backbones (OTN),
c) arranging a location-independent central interlocking system data processing unit sending data packets via several ports, which arrive redundantly via both gateways (UCOM) to the location-dependent decentralised functional unit (SU), wherein the decentralised functional unit (SU) also sends data packets via two ports to the central interlocking system data processor, and wherein the central interlocking system data processing unit transmits redundant data packets via different ports to a determined functional unit (SU), which receives the redundant data packets via different ports.

8. The method according to claim 7, wherein redundant data packets comprise different network addresses but same sequence numbers by means of which the central interlocking system data processing unit or the decentralised functional unit (SU) can identify redundant data packets.

9. The method according to claim 7 or 8, wherein the decentralised functional unit (SU) receives redundant data packets via two ports and also utilises optionally the ports to forward data packets.

10. The method according to claim 7 to 9, wherein the gateway (UCOM) only forwards data packets between a backbone and a line that are directed at decentralised field elements (DFE) being part of that line, wherein data packets with an address unknown to the gateway (UCOM) are discarded by the gateway (UCOM).

11. The method according to claim 10, wherein the gateway is enabled to self-configure and to learn on the basis of sender addresses which of the decentralised functional units (SU) are comprised in the line terminated by that gateway.

12. The method according to claim 10 or 11, wherein the gateway learns the address of the decentralised functional unit (SU) comprised in that line by means of "Hello" packets, which are send out periodically by the data processors that are connected to the decentralised functional unit (SU).

## Revendications

1. Un réseau de données ferroviaires à architecture hiérarchique pour la communication, hautement fiable et déterministe dans le temps, de paquets de données de commande du trafic ferroviaire d'un poste d'aiguillage (Stw) à des éléments de terrain décentralisés (DFE) et/ou d'éléments de terrain décentralisés (DFE) au poste d'aiguillage (Stw), comprenant :
a) un ou plusieurs réseaux dorsaux haute disponibilité (OTN) ;
b1)
le poste d'aiguillage qui est connecté de manière redondante au réseau dorsal ou aux réseaux dorsaux (OTN) par au moins deux interfaces ;
b2)
au moins deux éléments de terrain décentralisés (DFE) interconnectés pour constituer une ligne et qui se couplent via respectivement une unité fonctionnelle décentralisée (SU) sur la ligne, les deux extrémités de la ligne se terminant par une passerelle (UCOM) et étant interconnectées via le réseau dorsal ou les réseaux dorsaux (OTN) pour constituer un anneau ;
c) un ordinateur de poste d'aiguillage, central et indépendant de l'emplacement, qui émet via plusieurs ports des paquets de données qui parviennent de manière redondante à l'unité fonctionnelle décentralisée (SU) dépendante de l'emplacement via les deux passerelles (UCOM), l'unité fonctionnelle décentralisée (SU) envoyant également des paquets de données à l'ordinateur central de poste d'aiguillage via deux ports et l'ordinateur central de poste d'aiguillage adressant, via des ports différents, des paquets de données redondants à une unité fonctionnelle décentralisée déterminée (SU) qui reçoit les paquets de données redondants via des ports différents.

2. Réseau de données ferroviaires selon la revendication 1, des paquets de données redondants disposant d'adresses réseau différentes, mais de numéros de séquence identiques grâce auxquels l'ordinateur central du poste d'aiguillage ou l'unité fonctionnelle décentralisée (SU) identifie des paquets de données redondants.

3. Réseau de données ferroviaires selon la revendication 1 ou 2, l'unité fonctionnelle décentralisée (SU) recevant des paquets de données redondants via les deux ports et utilisant également les ports, optionnellement, pour retransmettre des paquets.

4. Réseau de données ferroviaires selon l'une des revendications 1 à 3, la passerelle (UCOM) ne retransmettant entre un réseau dorsal et une ligne que des paquets qui sont adressés à des éléments de terrain décentralisés (DFE) qui se trouvent sur la ligne, des paquets avec une adresse inconnue au niveau de la passerelle (UCOM) étant rejetés par la passerelle (UCOM).

5. Réseau de données ferroviaires selon la revendication 4, la passerelle étant conçue de manière à s'autoconfigurer et apprenant, à l'aide des adresses émettrices, quelles unités fonctionnelles décentralisées (SU) se situent sur la ligne.

6. Réseau de données ferroviaires selon la revendication 4 ou 5, la passerelle apprenant l'adresse des unités fonctionnelles décentralisées (SU) situées sur la ligne par des paquets « Hello » émis périodiquement par les ordinateurs reliés à l'unité fonctionnelle décentralisée (SU) .

7. Procédé pour la communication, hautement fiable et déterministe dans le temps, de paquets de données de commande du trafic ferroviaire d'un poste d'aiguillage (Stw) à des éléments de terrain décentralisés (DFE) et/ou d'éléments de terrain décentralisés (DFE) au poste d'aiguillage (Stw) dans un réseau de données ferroviaires à architecture hiérarchique, comprenant les étapes suivantes
a) configuration d'un ou de plusieurs réseaux dorsaux haute disponibilité (OTN) ;
b1)
configuration d'un poste d'aiguillage qui est connecté de manière redondante au réseau dorsal ou aux réseaux dorsaux (OTN) par au moins deux interfaces ;
b2)
configuration d'au moins deux éléments de terrain décentralisés (DFE) interconnectés pour constituer une ligne et qui se couplent via respectivement une unité fonctionnelle décentralisée (SU) sur la ligne, les deux extrémités de la ligne se terminant respectivement par une passerelle (UCOM) et étant interconnectées via le réseau dorsal ou les réseaux dorsaux pour constituer un anneau ;
c) configuration d'un ordinateur de poste d'aiguillage, central et indépendant de l'emplacement, qui émet via plusieurs ports des paquets de données qui sont adressés de manière redondante à l'unité fonctionnelle décentralisée (SU) dépendante de l'emplacement via les deux passerelles (UCOM), l'unité fonctionnelle décentralisée (SU) envoyant également des paquets de données à l'ordinateur central de poste d'aiguillage via deux ports et l'ordinateur central de poste d'aiguillage adressant, via des ports différents, des paquets de données redondants à une unité fonctionnelle décentralisée déterminée (SU) qui reçoit les paquets de données redondants via des ports différents.

8. Procédé selon la revendication 7, des paquets de données redondants disposant d'adresses réseau différentes, mais de numéros de séquence identiques grâce auxquels l'ordinateur central du poste d'aiguillage ou l'unité fonctionnelle décentralisée (SU) identifie des paquets de données redondants.

9. Procédé selon la revendication 7 ou 8, l'unité fonctionnelle décentralisée (SU) recevant des paquets de données redondants via les deux ports et utilisant également les ports pour retransmettre des paquets.

10. Procédé selon l'une des revendications 7 à 9, la passerelle (UCOM) ne retransmettant entre un réseau dorsal et une ligne que des paquets qui sont adressés à des éléments de terrain décentralisés (DFE) qui se trouvent sur la ligne, des paquets avec une adresse inconnue au niveau de la passerelle (UCOM) étant rejetés par la passerelle (UCOM).

11. Procédé selon la revendication 10, l'unité de configuration étant conçue de manière à s'autoconfigurer et apprenant, à l'aide des adresses émettrices, quelles unités fonctionnelles décentralisées (SU) se situent sur la ligne.

12. Procédé selon la revendication 10 ou 11, l'unité de communication apprenant l'adresse des unités fonctionnelles décentralisées (SU) situées sur la ligne par des paquets « Hello » émis périodiquement par les ordinateurs reliés à l'unité fonctionnelle décentralisée.
